# FASCICULE DE BREVET EUROPEEN

(11) **EP 2 560 879 B1**
(45) Date de publication et mention de la délivrance du brevet: **14.12.2016**
(21) Numéro de dépôt: 11714795.9
(22) Date de dépôt: 19.04.2011
(51) Int. Cl.: B64G 1/58, F16L 59/04, C08L 97/00, C08K 7/04, C08L 63/00, C08L 61/04, C08K 7/06, C09K 3/00

(54) **MATERIAU DE PROTECTION THERMIQUE OPTIMISE**
OPTIMIERTES WÄRMESCHUTZMATERIAL
OPTIMIZED THERMAL PROTECTION MATERIAL

(30) Priorité: 22.04.2010 FR 1053086
(43) Date de publication de la demande: 27.02.2013
(73) Titulaire: Airbus Safran Launchers SAS, 92130 Issy-les-Moulineaux (FR)
(72) Inventeur: PLAINDOUX, Cédric, F-33200 Bordeaux (FR); BOUILLY, Jean-Marc, F-33160 Saint Medard En Jalles (FR)
(74) Mandataire: Ipside
(86) Numéro de dépôt international: PCT/EP2011/056269
(87) Numéro de publication internationale: WO 2011/131692

(56) Documents cités:
- EP-A2- 1 482 163
- WO-A1-2004/033572
- CH-A- 274 859
- GB-A- 846 577
- GB-A- 879 411
- US-A- 2 087 942
- US-A- 4 031 059
- US-A- 4 595 714
- US-A- 5 064 868
- RECULUSA ET AL: "Formation of low-density carbon materials through thermal degradation of a cork-based composite", CARBON, ELSEVIER, OXFORD, GB, vol. 44, no. 7, 1 juin 2006 (2006-06-01), pages 1316-1320, XP025010899, ISSN: 0008-6223, DOI: DOI:10.1016/J.CARBON.2005.12.051

## Description

La présente invention concerne les matériaux de protection thermique, du type de ceux utilisés dans le domaine spatial. Ces matériaux sont destinés à protéger des structures ou des équipements contre des sollicitations thermiques très importantes, mais pendant des durées courtes ne dépassant pas quelques minutes.

Ces matériaux sont nécessaires de façon générale lors des phases de traversée de l'atmosphère des planètes, que ce soit au lancement ou à la rentrée.

Ils sont aussi utilisés comme protection envers les sources chaudes des lanceurs ou véhicules spatiaux, comme les systèmes de propulsion.

Les capacités naturelles d'isolation thermique du liège associées à un liant résistant à des hautes températures permettent son utilisation dans les industries aérospatiales et militaires pour de telles applications.

Il existe de nombreuses réalisations de matériaux de protection thermique et notamment le document US 2001/0036505 A1 concerne une composition poreuse comprenant des particules de liège et un liant, le document US 4 204 899 concerne la réalisation d'un matériau de protection thermique ablatif comprenant du liège finement divisé et une résine thermodurcissable et le document EP 1 493 788A1 décrit un matériau ablatif de protection thermique pour l'entrée atmosphérique d'un véhicule spatial comportant du liège et du silicone pouvant être projeté sur une surface.

Le document US2005/0096414 A1 décrit pour sa part un matériau de protection thermique comprenant une résine silicone, un catalyseur silicone, du liège, des écosphères de verre et un solvant silicone, la résine silicone étant présente dans une quantité de 65,3 à 72,3 pourcent massique.

Un matériau utilisé est aussi le matériau connu sous la marque NORCOAT du groupe EADS.

Ce matériau décrit notamment dans le document RECULUSA ET AL: "Formation of low density carbon materials through thermal dégradation of a cork based composite" comprend 100 parties pondérales de liège 0,5 à 1 mm, 35 parties pondérales de résine phénolique, un fongicide et un ignifugeant.

Le document EP 1 482 163 A2 décrit un matériau isolant, utilisable pour la protection d'enveloppes moteur et de parties exposées aux hautes températures et flux d'air pour des aéronefs, qui comprend un mélange de particules de liège, de fibres et un liant à base siloxane. Les fibres sont choisies dans le groupe comprenant les fibres aramide, PBO, carbone, oxyde d'aluminium, nitrure de silicium et leurs mélanges.

Le document US 4 031 059 A décrit une composition ablative de faible densité comportant 100 partie par volume d'une résine siloxane élastomère et des charges de faible densité comportant de 600 à à peu près 900 parties par volume de particules de liège pour 100 parties de résine; de à peu près 500 à 800 parties par volume de microsphères creuses de silice ou de verre pour 100 parties de résine; jusqu'à à peu près 260 parties by volume de microballons creux de résine phénolique.

Le document US 4 595 714 A décrit une composition de revêtement adaptée à être appliquée sur un substrat pour y polymériser et réaliser un revêtement ablatif qui consiste essentiellement en un mélange réactif de résine époxy et de résine polysulfide auto polymérisable et formant un revêtement dur et adhésif qui forme un charbon en cas d'exposition à un environnement ablatif, un agent de durcisssement amine pour le mélange réactif, un mélange finement divisé de trihydrate de borate et d'aluminium et des fibres réfractaires courtes qui gardent leur structure pendant la carbonisation.

L'objectif de la présente invention est d'optimiser en termes de performance massique les matériaux existants vis-à-vis des applications à bas ou haut flux, de 0,1 MW/m2 jusqu'à 10 MW/m2, et d'obtenir des matériaux nettement moins denses que les matériaux actuellement utilisés dans ce domaine.

Les flux intenses se rencontrent sur les boucliers avant de véhicules spatiaux, ou sur les parties arrières des véhicules soumises aux flux de propulsion.

Les faibles flux se retrouvent sur les parties arrières de véhicules de rentrée atmosphérique.

L'objectif de la présente invention est d'optimiser en termes de performance massique les matériaux existants quant à leur comportement en ablation. Il s'agit d'optimiser le comportement sous flux thermique de la croute qui se forme sur le matériau soumis au flux thermique.

Pour ce faire, la présente invention prévoit un matériau de protection thermique d'une surface réalisé à partir d'un mélange comprenant des granulés de liège et une résine formant un liant caractérisé en ce qu'il comprend en outre des fibres courtes d'un matériau résistant à la chaleur selon la revendication 1.

La proportion de fibres courtes dans le matériau est de 12 à 18% massique et préférablement la proportion de fibres courtes correspond à un pourcentage massique de 14.5 à 15,5%.

Selon un premier mode de réalisation, la résine est une résine phénolique.

Dans ce cas, le pourcentage massique de la résine est de 20 à 30% et préférablement de 25,9% ± 2%

Selon un second mode de réalisation, la résine est une résine époxyde.

Le pourcentage massique dans le mélange de la résine époxyde est alors de 20 à 35 % et préférablement de 27% ±2%.

La résine époxy peut notamment être une résine à deux composants

Selon une première variante de l'invention, les fibres courtes sont des fibres de carbone.

Selon une seconde variante, les fibres courtes sont des fibres d'alumine.

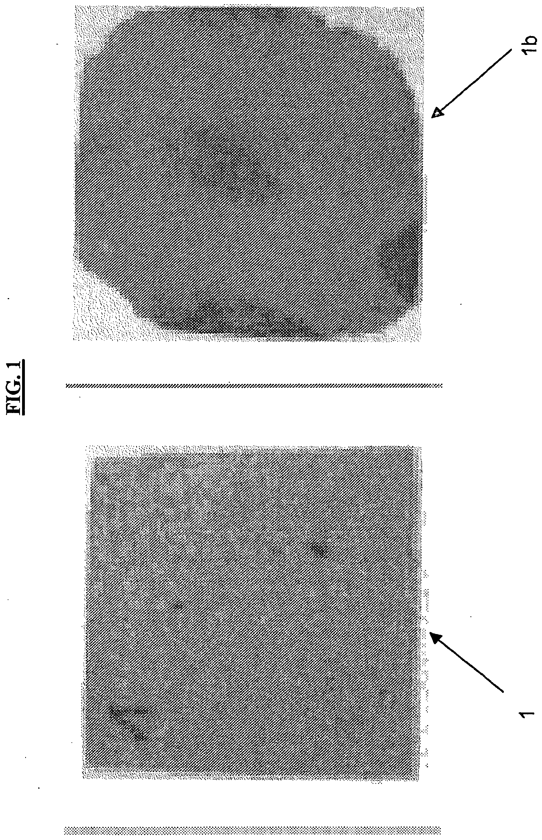

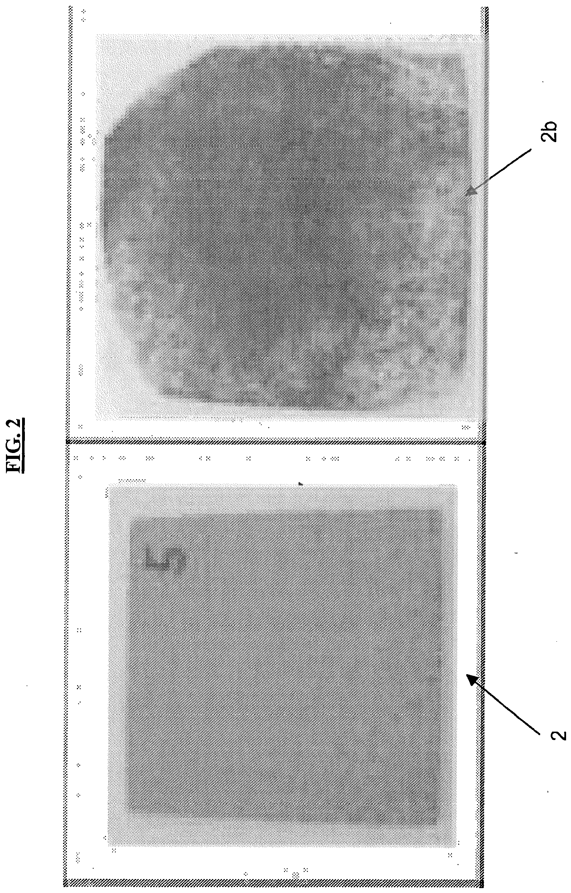

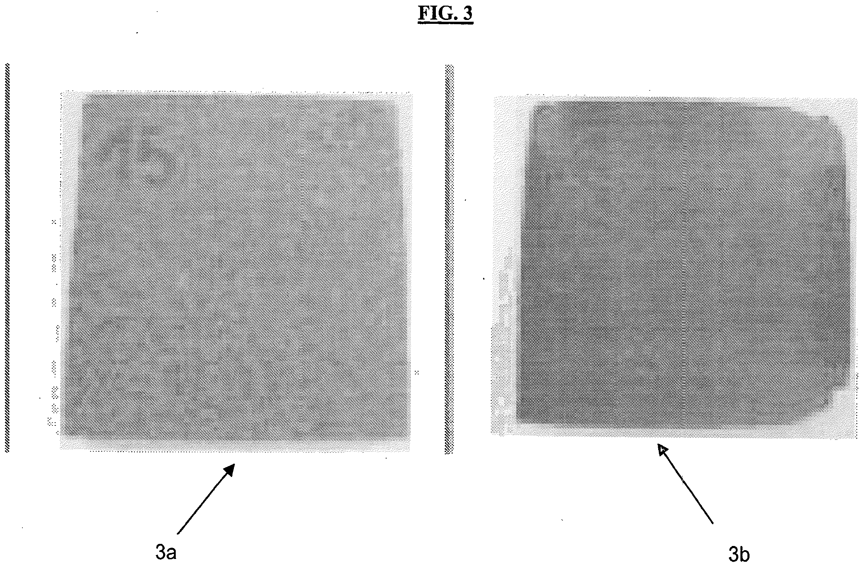

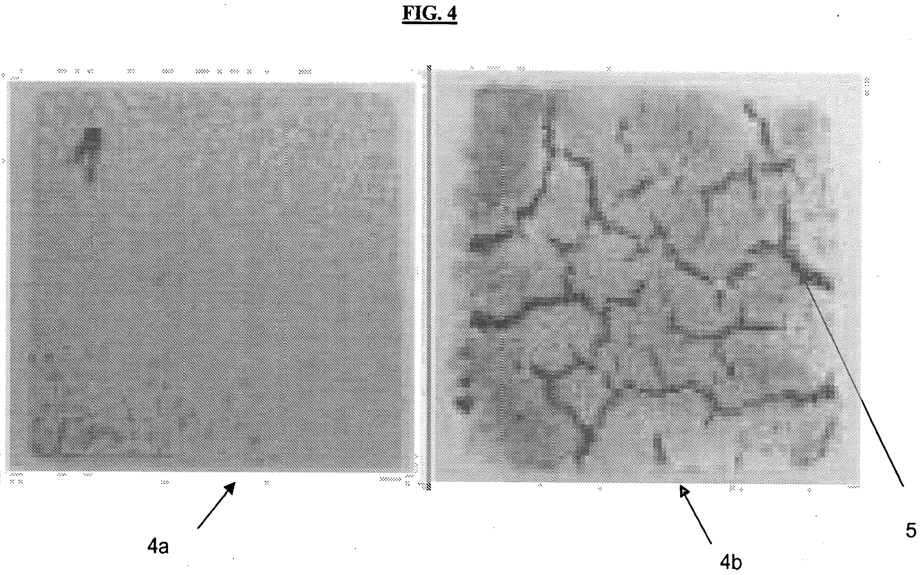

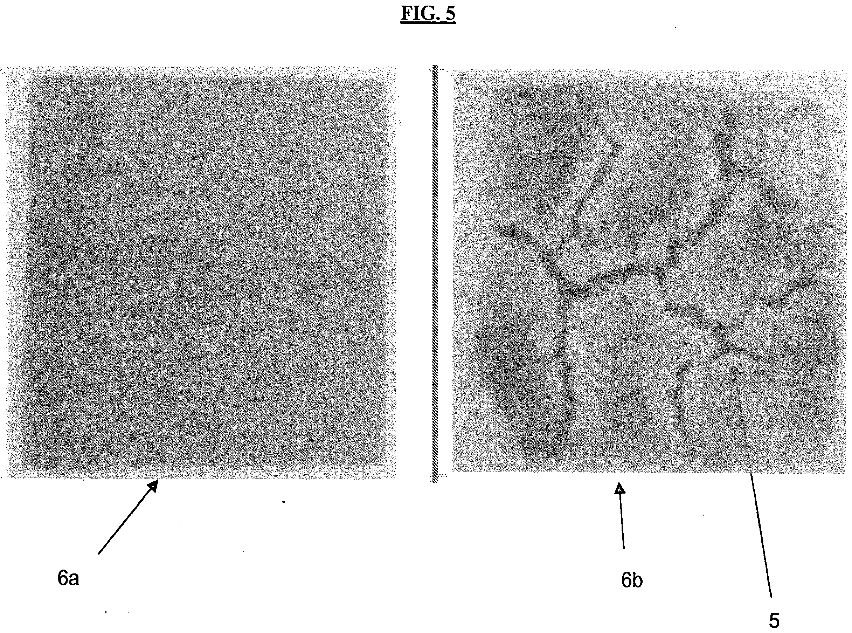

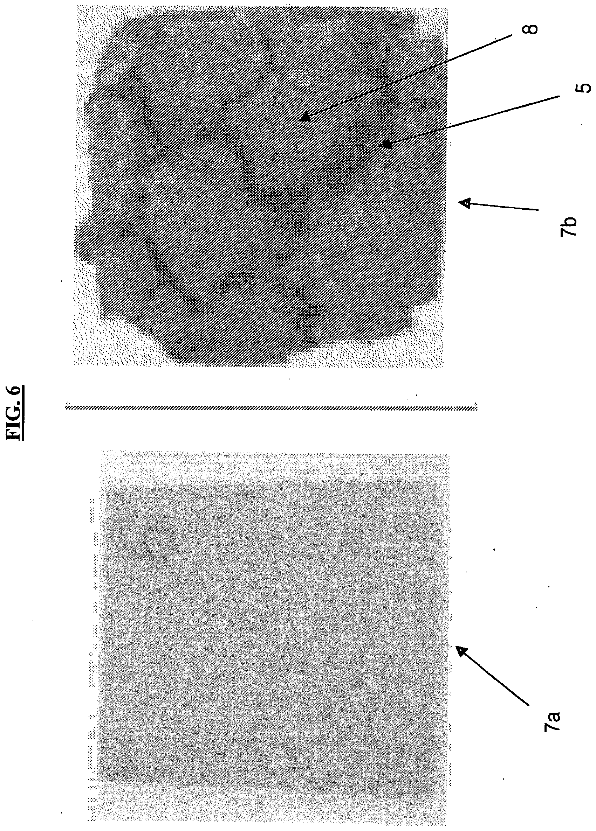

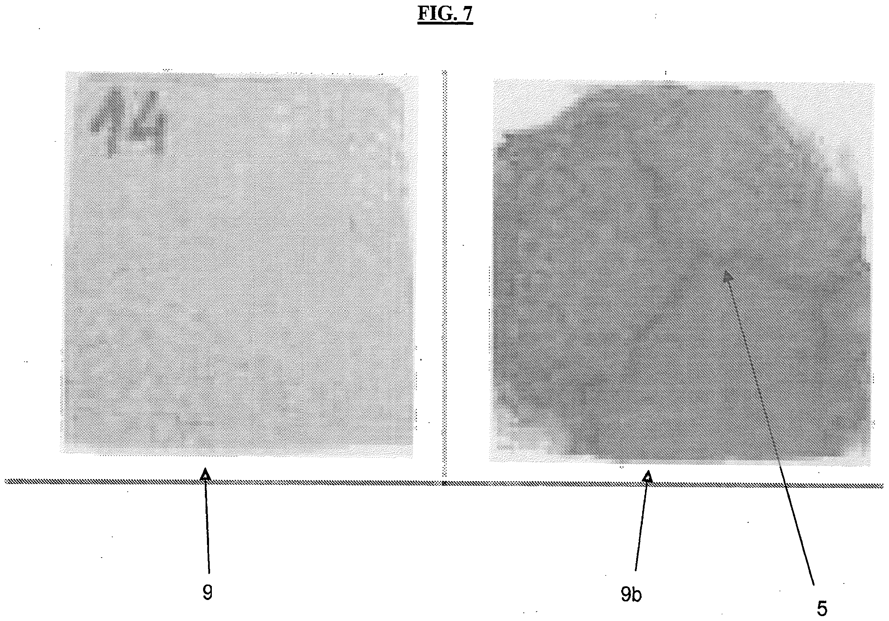

D'autres caractéristiques et avantages de l'invention seront mieux compris à la lecture de la description qui suit d'exemples de réalisation non limitatifs de l'invention accompagnée des dessins qui représentent:
en figure 1: un premier matériau de l'invention avant et après essai thermique;
en figure 2: un deuxième matériau de l'invention avant et après essai thermique;
en figure 3: un troisième matériau de l'invention avant et après essai thermique;
aux figures 4 et 5: un matériau à liant silicone respectivement sans et avec fibres avant et après essai thermique;
en figure 6: un matériau de l'art antérieur sans fibres avant et après essai thermique;
en figure 7: un matériau à liant époxide sans fibres avant et après essai.

Les matériaux de protection thermique utilisés dans te cadre des missions spatiales sont exposés à des sollicitations thermiques importantes pendant des durées courtes. Il existe des matériaux à projeter sur les surfaces à protéger et des matériaux en plaques, la présente invention ayant trait aux matériaux en plaques.

Du fait de leur principe de fonctionnement, on ne peut caractériser ces matériaux, notamment ceux comportant du liège, selon des critères tels que leur conductivité thermique, leur capacité calorifique et leur diffusivité.

En outre on ne peut pas définir une température à laquelle ils sont soumis par contre on peut caractériser leur condition d'emploi par une loi exprimant le flux thermique appliqué en fonction du temps.

Soumis au flux thermique dû au frottement d'une atmosphère, les matériaux de protection thermique réagissent de façon transitoire : ils s'échauffent par conduction thermique et rayonnement, transmettent la chaleur par leur diffusivité, et se décomposent.

Leur surface exposée au flux peut en outre s'éliminer peu à peu.

Ce dernier comportement dit ablatif est fondamental pour ce type de matériaux du fait qu'il permet de diminuer le flux de chaleur entrant.

Le comportement des matériaux lors de cette ablation doit être tel que te matériau qui se décompose donne un résidu appelé croute qui demeure en surface du matériau.

Il faut que cette croute reste en place malgré les sollicitations mécaniques que peut subir le matériau, vibration et frottement aérodynamique en particulier.

En outre, de façon à ne pas modifier le profil aérodynamique de l'objet lors de son parcours atmosphérique, il faut que cette croute soit homogène et le moins fissurée possible.

Enfin, il faut que la formation de cette croute s'accompagne du plus petit recul possible de la surface du matériau, de façon à conserver le pouvoir isolant du matériau.

Pour optimiser les matériaux et obtenir un bon comportement de ces derniers, de nombreux paramètres peuvent être modifiées, le but étant qu'en fin de mission du véhicule spatial l'augmentation de température de la face froide du matériau soit la plus faible possible pour une masse de protection la plus faible possible.

Un critère important d'optimisation des matériaux de protection thermique est leur masse du fait que l'optimisation des solutions techniques en terme de masse est un objectif permanent lorsque l'on construit un véhicule spatial ou un aéronef.

En effet, toute masse gagnée sur la structure se traduit soit par une possibilité plus grande de charge utile, soit une réduction de la masse de propergols à emporter et permet éventuellement une réduction de masse de la structure porteuse.

Les effets de la réduction de masse sont non seulement techniques mais également économiques. Réduire la masse du véhicule est déjà très important sur un lanceur mais l'est encore plus pour une sonde spatiale qui doit retourner sur une planète après un séjour dans l'espace.

Avec un matériau dont la croute reste la plus homogène possible on peut envisager de réduire l'épaisseur du matériau de protection ce qui permet une réduction de la masse de matériau nécessaire.

Les missions pour lesquelles on a besoin de protection thermiques sont caractérisées en termes de flux thermique, de durée de la sollicitation thermique, et également en termes de charge thermique ce qui correspond au flux total accumulé pendant la mission.

Les essais conduits sont des essais de pyrolyse conduits selon la norme ISO 5660 avec une irradiation de 75kW/m² pendant une durée de 300 secondes.

Un tel essai permet d'approximer le comportement du matériau par rapport à la mission prévue de façon adéquate.

En figure 1 est représenté un premier matériau 1a, 1b de l'invention qui comporte de la résine phénolique en proportion massique de 25,9% ± 2% ainsi que des fibres de carbone pour une proportion massique de 14,8% ± 2%. Le matériau est représenté avant 1 a et après 1 b essai thermique. Après essai thermique, le matériau présente une croute homogène et ne comporte pas de fissures.

En figure 2 est représenté un second matériau 2a, 2b de l'invention qui comporte de la résine phénolique en proportion massique de 25,9% ± 2% ainsi que des fibres d'alumine pour une proportion massique de 14,8% ± 2%. Après essai thermique 2b, le matériau présente aussi une croute homogène et ne comporte pas de fissures.

En figure 3 est représenté un troisième matériau 3a, 3b de l'invention. Ce matériau comporte de la résine époxyde en proportion massique de 27% ± 2% ainsi que des fibres de carbone pour une proportion massique de 14,8% ± 2%. Après essai thermique 3b, le matériau présente lui aussi une croute homogène dépourvue de fissures.

A la figure 4 on a représenté un matériau 4a, 4b à liant résine silicone dans une proportion massique de 24,2% et une charge aérogel dans une proportion massique de 14,8% sans fibres avant 4a et après 4b essai thermique. Après essai, l'échantillon présente d'importantes fissures 5 qui le rendent impropre à servir d'isolant thermique à haut flux et qui ne fait donc pas partie de l'invention.

A la figure 5 on a représenté un matériau 6a, 6b à liant résine silicone dans une proportion massique de 24,2% et des fibres de carbone dans une proportion massique de 14,8% avant 6a et après 6b essai thermique. Ici encore, des fissures importantes 5 apparaissent et le matériau est impropre à un usage en tant qu'isolant thermique pour des flux importants et qui ne fait donc pas partie de l'invention.

la figure 6 représente le matériau NORCOAT 7a, 7b de l'art antérieur sans ajout de fibres. Après essai thermique 7b, ce matériau présente des boursouflures 8 et des fissures 5 importantes, son usage n'est donc possible qu'en grosses épaisseurs ce qui n'est pas compatible avec une optimisation de la masse de matériau isolant et une bonne aérodynamique de l'engin le comportant.

Pour mieux mettre en avant l'apport des fibres dans la tenue du matériau, un essai a été fait avec un liège comportant le liant résine époxyde de la figure 3 sans fibres. La figure 7 représente ce matériau avant 9a et après 9b essai. Dans la photo après essai on distingue une important fissure 5 formant une étoile à trois branches dont le centre se situe à peu près au centre de l'échantillon.

Les fibres de type fibres courtes de carbone ou d'alumine accroissent la cohésion du matériau dans lequel elles sont incorporées et améliorent la tenue de ce matériau soumis à un flux de chaleur intense.

L'examen des résultats obtenus permet de conclure que la présence de fibres en général, qu'elles soient de carbone ou d'alumine, fait disparaître l'essentiel des fissures de la croute.

Le meilleur résultat est obtenu pour des matrices phénoliques et époxy que l'on utilise des fibres de carbone ou des fibres d'alumine.

Par contre, en présence d'une matrice silicone des fissures restent présentes.

Ainsi l'ajout de fibres telles que carbone ou alumine permet une meilleure conservation de l'état de surface lors de l'utilisation des matériaux de protection thermique à base de liège, de densité comprise entre 0.2 et 0.45.

Dans le cadre de la présente invention, les matériaux présentant les meilleurs résultats comprennent un liant à base de résine phénolique ou époxyde.

Le matériau de protection thermique est réalisé à partir d'un mélange comprenant des granulés de liège et une résine formant un liant qui comprend en outre des fibres courtes d'un matériau résistant à la chaleur.

La proportion de fibres courtes dans le matériau est de 12 à 18% massique et la proportion de fibres courtes correspond préférablement à un pourcentage massique de 14,5 à 15,5%.

Dans le cas où la résine est une résine phénolique, le pourcentage massique de la résine est de 20 à 30% et préférablement de 25,9% ±2%.

Dans le cas où la résine est une résine époxyde, le pourcentage massique dans le mélange de la résine époxyde est de 20 à 35 % et préférablement de 27% ± 2%.

La résine époxy choisie est une résine à deux composantes.

Les fibres courtes sont des fibres de carbone ou éventuellement des fibres d'alumine.

Au delà de l'application initiale de réalisation de protections thermiques pour véhicules spatiaux, la présente invention peut trouver de nombreuses autres application comme protection thermique dans le domaine du transport ferroviaire, maritime, aéronautique ou terrestre; le domaine de l'industrie tels que les machines, le domaine de la construction comme les protections coupe feu.

## Revendications

1. Matériau ablatif de protection thermique d'une surface, à base de liège de densité comprise entre 0,2 et 0,45, réalisé à partir d'un mélange comprenant des granulés de liège et une résine formant un liant et adapté à former une croute sous exposition à un flux thermique **caractérisé en ce que** la proportion de résine dans le matériau est de 20 à 30% massique de résine phénolique ou de 20 à 35% massique de résine époxy, ledit matériau comprenant de 12 à 18% massique de fibres courtes de carbone ou d'alumine.

2. Matériau de protection thermique selon la revendication 1 **caractérisé en ce que** la proportion de fibres courtes correspond à un pourcentage massique de 14,5 à 15,5%.

3. Matériau de protection thermique selon la revendication 1 ou 2 pour lequel la résine est une résine phénolique et pour lequel le pourcentage massique de la résine est de 25,9% ± 2%.

4. Matériau de protection thermique selon la revendication 3 comportant de la résine phénolique en proportion massique de 25,9% ± 2% ainsi que des fibres courtes de carbone ou d'alumine pour une proportion massique de 14,8% ± 2% et le complément en granules de liège.

5. Matériau de protection thermique selon la revendication 1 ou 2 pour lequel la résine est une résine époxyde et pour lequel le pourcentage massique de résine époxy dans le mélange est de 27% ± 2%.

6. Matériau de protection thermique selon l'une quelconque des revendications 1, 2 ou 5 pour lequel la résine est une résine époxy à deux composantes.

7. Matériau de protection thermique selon l'une quelconque des revendications 1, 5 ou 6 contenant de la résine époxyde pour une proportion massique de 27% ± 2%, des fibres courtes de carbone pour une proportion massique de 14,8% ± 2%.

## Patentansprüche

1. Ablatives Wärmeschutzmaterial einer Oberfläche auf Korkbasis mit einer Dichte zwischen 0,2 und 0,45, das aus einer Mischung hergestellt ist, die Korkgranulat und Harz umfasst, das ein Bindemittel bildet und geeignet ist, ein Kruste zu bilden, wenn es einem Wärmefluss ausgesetzt wird, **dadurch gekennzeichnet, dass** der Anteil an Harz in dem Material von 20 bis 30 Gew.-% Phenolharz oder von 20 bis 35 Gew.-% Epoxidharz beträgt, wobei das Material von 12 bis 18 Gew.-% an kurzen Kohlenstoff- oder Aluminiumfasern umfasst.

2. Wärmeschutzmaterial nach Anspruch 1, **dadurch gekennzeichnet, dass** der Anteil an kurzen Fasern einem Gewichtsprozent von 14,5 von 15,5 entspricht.

3. Wärmeschutzmaterial nach Anspruch 1 oder 2, wobei das Harz ein Phenolharz ist und wobei das Gewichtsprozent des Harzes 25,9 ± 2 beträgt.

4. Wärmeschutzmaterial nach Anspruch 3, das Phenolharz in einem Massenanteil von 25,9 % ± 2 % und kurze Kohlenstoff- oder Aluminiumfasern in einem Massenanteil von 14,8 % ± 2 % und den Rest in Korkgranulat umfasst.

5. Wärmeschutzmaterial nach Anspruch 1 oder 2, wobei das Harz ein Epoxidharz ist und wobei das Gewichtsprozent des Epoxidharzes in der Mischung 27 ± 2 beträgt.

6. Wärmeschutzmaterial nach einem der Ansprüche 1, 2 oder 5, wobei das Harz ein Zweikomponenten-Epoxidharz ist.

7. Wärmeschutzmaterial nach einem der Ansprüche 1, 5 oder 6, das das Epoxidharz in einem Massenanteil von 27 % ± 2 %, kurze Kohlenstofffasern in einem Massenanteil von 14,8 % ± 2 % umfasst.

## Claims

1. Ablative material for thermal protection of a surface, based on cork having a density of between 0.2 and 0.45, produced from a mixture that comprises cork granules and a resin that forms a binder and suitable for forming a crust upon exposure to a heat flux, **characterized in that** the proportion of resin in the material is from 20% to 30% by weight of phenolic resin or from 20% to 35% by weight of epoxy resin, said material comprising from 12% to 18% by weight of short carbon or alumina fibres.

2. Thermal protection material according to Claim 1, **characterized in that** the proportion of short fibres corresponds to a weight percentage of from 14.5% to 15.5%.

3. Thermal protection material according to Claim 1 or 2, for which the resin is a phenolic resin and for which the weight percentage of the resin is 25.9% ± 2%.

4. Thermal protection material according to Claim 3, comprising phenolic resin in a weight proportion of 25.9% ± 2% and also short carbon or alumina fibres in a weight proportion of 14.8% ± 2% and the balance being cork granules.

5. Thermal protection material according to Claim 1 or 2, for which the resin is an epoxy resin and for which the weight percentage of epoxy resin in the mixture is 27% ± 2%.

6. Thermal protection material according to any one of Claims 1, 2 or 5, for which the resin is a two-component epoxy resin.

7. Thermal protection material according to any one of Claims 1, 5 or 6, containing epoxy resin in a weight proportion of 27% ± 2%, short carbon fibres in a weight proportion of 14.8% ± 2%.
